# EUROPÄISCHE PATENTSCHRIFT

(11) **EP 2 065 167 B1**
(45) Veröffentlichungstag und Bekanntmachung des Hinweises auf die Patenterteilung: **29.10.2014**
(21) Anmeldenummer: 08170316.7
(22) Anmeldetag: 28.11.2008
(51) Int. Cl.: B29C 65/10, B29C 65/60, B29C 57/04, F16L 41/08, F28F 9/18

(54) **Verfahren und Vorrichtung zum Schweißen von Teilen aus thermoplastischen Materialien**
Method and apparatus for welding parts made of thermoplastic materials
Procédé et dispositif de soudage de pièces à partir de matériaux thermoplastiques

(30) Priorität: 29.11.2007 AT 19482007
(43) Veröffentlichungstag der Anmeldung: 03.06.2009
(73) Patentinhaber: Rosenkranz, Helmut, 8200 Gleisdorf (AT)
(72) Erfinder: Rosenkranz, Helmut, 8200 Gleisdorf (AT)
(74) Vertreter: Wirnsberger, Gernot

(56) Entgegenhaltungen:
- EP-A2- 0 299 182
- DE-A1- 2 502 181
- JP-A- 2006 046 712
- JP-A- 2007 168 168

## Beschreibung

Die Erfindung betrifft ein Verfahren zum Schweißen von Teilen aus thermoplastischen Materialien, wobei ein erster, insbesondere flach ausgebildeter Teil, der zumindest eine Öffnung aufweist, im Bereich der Öffnung mit einem weiteren, rohrförmigen Teil verschweißt wird, dessen äußerer Durchmesser etwa einem Durchmesser der Öffnung entspricht, sowie einen Gegenstand, welcher nach diesem Verfahren hergestellt ist.

Des Weiteren betrifft die Erfindung eine Vorrichtung zum Verschweißen eines ersten, insbesondere flach ausgebildeten Teils, der zumindest eine Öffnung aufweist, mit einem weiteren, rohrförmigen Teil im Bereich der Öffnung des ersten Teils, wobei ein äußerer Durchmesser des rohrförmigen Teils etwa einem Durchmesser der Öffnung entspricht und wobei beide Teile aus thermoplastischen Materialien gebildet sind, wobei Halteelemente, mit welchen der erste Teil und der durch die Öffnung des ersten Teils mit einem vorstehenden Bereich eingeführte rohrförmige Teil relativ zueinander fixierbar sind, sowie eine Heizeinrichtung zum Erwärmen des vorstehenden Bereiches und eines dazu benachbarten Bereiches des ersten Teils und ein Stempel zum Andrücken des erwärmten vorstehenden Bereiches an den ersten Teil vorgesehen sind.

Ein Verfahren der eingangs genannten Art wird insbesondere bei der Herstellung eines Innenlebens eines Wärmetauschers für stark korrosive Medien, beispielsweise verdünnte Schwefelsäure, angewandt. Dabei werden an einem im Wesentlichen flach ausgebildeten Teil aus einem thermoplastischen Material mehrere Hundert rohrförmige Stücke aus dem gleichen oder einem ähnlichen thermoplastischen Material mittels eines Schweißverfahrens angeformt. Bislang sind derartige Gegenstände händisch gefertigt worden, wobei die rohrförmigen Teile an den flachen Teil angesetzt und z. B. mithilfe eines Schweißdrahtes angeschweißt worden sind.

Ein solches Verfahren bringt allerdings erhebliche Nachteile mit sich. So kann eine konstant gute Qualität der Schweißnähte bzw. Schweißverbindungen nicht sichergestellt werden. Darüber hinaus ist auch eine erforderliche Zeit für das Verschweißen der vorgesehenen Teile unbefriedigend lang. Ein weiterer Nachteil besteht darin, dass eine Haltbarkeit der Schweißnaht bzw. Schweißverbindung limitiert ist.

Darüber hinaus ist aus der DE 25 02 181 A1 ein Verfahren zum Verbinden von Rohren mit Rohrböden aus thermoplastischem Kunststoff bekannt, bei dem ein aus einer teilweise konischen Öffnung eines Rohrbodens vorstehendes Rohr mit einer Heizeinrichtung mit einem buchsenförmigen Ansatz endseitig erwärmt und anschließend in die ebenfalls erwärmte konische Öffnung eingepresst wird, um eine Schweißverbindung herzustellen.

Aus der EP 0 299 182 A2 ist ein Verfahren zum Verbinden eines porösen Rohres mit einem Rohrboden bekannt, wobei ein aus einer Öffnung des Rohrbodens vorstehendes Rohrende in einer Nut einer Heizeinrichtung erschmolzen und die Schmelze anschließend am Rohrboden abgelegt wird, der dann zur Bildung einer Schweißverbindung ebenfalls durch die Heizeinrichtung erwärmt wird. Weiter ist aus diesem Dokument eine Vorrichtung gemäß dem Oberbegriff des Anspruchs 13 bekannt.

In der JP 2006046712 A wird ein Verfahren zum Ultraschallschweißen von Kunststoffrohren beschrieben, wobei ein vorstehender Teil eines Rohres mit einem Rohrboden verschweißt wird.

Weiter ist ein Verfahren zum Verbinden von Kunststoffteilen aus der JP 2007168168 A bekannt geworden. Dieses Verfahren erfordert eine komplexe Mechanik einer Vorrichtung, mit welcher das Verfahren durchgeführt wird, da viele thermische und mechanische Verfahrensschritte nötig sind, um die Verbindung herzustellen.

Aufgabe der Erfindung ist es, ein Verfahren der eingangs genannten Art anzugeben, mit dem haltbare Schweißnähte bzw. Schweißverbindungen guter Qualität auf einfache Weise herstellbar sind.

Daneben ist es ein Ziel der Erfindung, eine Vorrichtung zum Durchführen eines derartigen Verfahrens anzugeben.

Die erfindungsgemäße Aufgabe wird dadurch gelöst, dass bei einem Verfahren der eingangs genannten Art der rohrförmige Teil von einer Seite zusammen mit einer innenseitig anliegenden Stützhülse in die Öffnung des ersten Teils eingeführt wird, sodass der rohrförmige Teil auf der anderen Seite des ersten Teils vorsteht, wonach ein vorstehender Bereich des rohrförmigen Teils und ein dazu benachbarter Bereich des ersten Teils auf eine Temperatur gebracht werden, bei welcher der vorstehende Bereich mit dem ersten Teil verschweißt werden kann, worauf bei Halten der Teile auf den vorstehenden Bereich des rohrförmigen Teils eine Kraft aufgebracht wird, um den vorstehenden Bereich auf den ersten Teil zu drücken und somit die Teile zu verschweißen.

Die mit der Erfindung erzielten Vorteile liegen insbesondere darin, dass eine relativ breit gestaltete Schweißnaht bzw. Schweißverbindung zwischen den zu verbindenden Teilen erstellt werden kann, womit die Haltbarkeit der Schweißnaht bzw. Schweißverbindung steigt. Weiter kann eine Höhe des vorstehenden und zu erwärmenden Bereiches des rohrförmigen Teils, der letztlich auch die Breite der Schweißnaht bzw. Schweißverbindung bestimmt, bei mehreren aufeinanderfolgenden Schweißoperationen beispielsweise mit Abstandshaltern auf einfache Weise vorgegeben werden, sodass eine konstante Breite und Qualität der Schweißnaht bzw. Schweißverbindung erzielt werden kann. Ein anderer Vorteil ist darin zu sehen, dass das Verfahren auf einfache Weise automatisiert durchgeführt werden kann, sodass eine Taktfrequenz für ein Erstellen einzelner Schweißnähte gering ist, was insbesondere bei der Erstellung eines Innenlebens eines Wärmetauschers aus thermoplastischen Materialien einen großen Vorteil darstellt, da mehrere Hundert, vorzugsweise qualitätsgleiche, Schweißnähte bzw. Schweißverbindungen zu erstellen sind.

Erfindungsgemäß ist vorgesehen, dass der rohrförmige Teil zusammen mit einer innenseitig anliegenden Stützhülse in die Öffnung eingeführt wird. Dadurch ist sichergestellt, dass sich der rohrförmige Teil beim Erwärmen, welches vor einem Verschweißen erforderlich ist, nicht verformt, sondern stabil gehalten und gegebenenfalls an die Öffnung des ersten Teils angepresst wird.

Diesbezüglich erweist es sich insbesondere als zweckmäßig, wenn eine Stützhülse eingesetzt wird, die länger als der rohrförmige Teil ist. Aus einem ähnlichen Grund kann auch vorgesehen sein, dass der erste Teil auf einer Stützplatte mit zumindest einer zur Öffnung korrespondierenden Durchbrechung aufgelegt wird, wobei die Öffnung und die Durchbrechung übereinander ausgerichtet werden. In diesem Fall ist auch für den ersten Teil eine Stütze gegeben, was insbesondere dann erforderlich sein kann, wenn der erste Teil aus einer dünnen Folie aus einem thermoplastischen Material besteht und sich somit leicht verformen kann.

Es wird dann zweckmäßigerweise so vorgegangen, dass die Stützhülse in den rohrförmigen Teil eingepresst und dabei in axialer Richtung an einem ihrer Enden mit einem Ende des rohrförmigen Teils bündig ausgerichtet wird, wonach die bündig ausgerichteten Enden des rohrförmigen Teils und der Stützhülse von oben in die Öffnung und Durchbrechung eingeführt werden. Der rohrförmige Teil kann anschließend zusammen mit der Stützhülse mit einem im Querschnitt etwa T-förmigen Stempel, der innerhalb der Stützhülse achsparallel zu dieser positioniert wird, durch die Öffnung und die Durchbrechung eingezogen werden, bis der rohrförmige Teil an einem Anschlag zu liegen kommt, wonach die Stützhülse optional alleine weiter eingezogen werden kann, bis der Stempel gegebenenfalls am rohrförmigen Teil zum Anliegen kommt. Dadurch kann eine optimale Ausrichtung des rohrförmigen Teils und der Stützhülse relativ zum ersten Teil erreicht werden, wobei bei Verschweißen mehrerer rohrförmiger Teile mit dem ersten Teil für jeden einzelnen Schweißprozess eine im Wesentlichen gleichbleibende Ausrichtung des rohrförmigen Teils gegeben ist, sich also die zu verschweißenden Teile jeweils mit Bezug auf die Stützplatte mit einer geringen Toleranz in gleicher Position befinden.

Damit die positionelle Fixierung des rohrförmigen Teils relativ zum ersten Teil während des Schweißprozesses mit besonders großer Wahrscheinlichkeit erhalten bleibt, kann vorgesehen sein, dass der erste Teil und der rohrförmige Teil während des Verschweißens relativ zueinander fixiert gehalten werden.

Das bei der Durchführung des erfindungsgemäßen Verfahrens erforderliche Erwärmen des rohrförmigen Teils bzw. dessen vorstehenden Bereiches erfolgt vorzugsweise mit Heißluft. Diesbezüglich kann vorgesehen sein, dass die Heißluft über mehrere Düsen gerichtet den zu erwärmenden Bereichen zugeführt wird. Um eine gleichmäßige Energiezufuhr bzw. Erwärmung zu ermöglichen, werden Auslässe der Düsen in einer Ebene und mit etwa gleichmäßigem Abstand zueinander sowie konstantem Abstand zur Umfangsfläche des rohrförmigen Teils angeordnet.

Um die Erwärmung weiter zu vergleichmäßigen, kann ferner vorgesehen sein, dass die Düsen während des Erwärmens um eine Längsachse des rohrförmigen Teils bzw. des vorstehenden Bereiches dieses Teils geschwenkt oder gedreht werden. Alternativ, jedoch weniger günstig, kann auch der rohrförmige Teil geschwenkt oder gedreht werden.

Die Vorteile eines erfindungsgemäßen Verfahrens treten besonders deutlich hervor, wenn der erste Teil in Form einer Lochplatte mit kreisrunden Öffnungen vorliegt und mehrere rohrförmige Teile mit einer passenden Zylinderform eingesetzt werden.

Entsprechend den vorstehenden Erläuterungen ist es ein Ziel der Erfindung, einen durch Verschweißen erstellten Gegenstand aus thermoplastischen Materialien anzugeben, der verbesserte 2 Eigenschaften aufweist. Dieses Ziel wird durch einen Gegenstand gemäß Anspruch 12 erreicht.

Das weitere Ziel der Erfindung wird durch eine Vorrichtung der eingangs genannten Art erreicht, bei der eine Stützhülse für den rohrförmigen Teil vorgesehen ist.

Vorteilhafte Weiterbildungen der Erfindung sind Gegenstand der betreffenden abhängigen Ansprüche.

Die mit einer erfindungsgemäßen Vorrichtung erzielten Vorteile sind vor allem darin zu sehen, dass die zu verbindenden Teile während eines Schweißprozesses eine starre bzw. fixierte Position einnehmen, sodass die Qualität einer Schweißnaht bzw. einer Schweißverbindung im Wesentlichen stets gleichbleibend ist. Darüber hinaus kann nach Erwärmen des vorstehenden Bereiches des rohrförmigen Teils und eines anliegenden Bereiches des ersten Teils mit dem vorgesehenen Stempel ein konstanter Druck auf den vorstehenden Bereich aufgebracht werden, was eine Ausbildung einer Schweißnaht bzw. Schweißverbindung hoher Qualität begünstigt.

Dabei ist es besonders bevorzugt, dass die Halteelemente eine Stützplatte mit zumindest einer Durchbrechung als Unterlage für den ersten Teil und zumindest eine im Bereich der Durchbrechung senkrecht zur Stützplatte angeordnete Hülse zum Halten des rohrförmigen Teils umfassen. Dadurch kann sichergestellt werden, dass die zu verbindenden Teile beim Schweißprozess in exakt zueinander ausgerichteter Position vorliegen. Dabei empfiehlt es sich, dass die Hülse an einer Unterseite der Stützplatte angeordnet ist. Insbesondere kann auch vorgesehen sein, dass die Hülse im an die Stützplatte anschließenden Bereich mit einem Durchmesser entsprechend dem Durchmesser der Durchbrechung ausgebildet ist und anschließend einen verjüngten Bereich aufweist. Dadurch ist gewährleistet, dass der rohrförmige Teil beim Einführen an der Hülse zur Anlage kommt und damit der vorstehende Bereich, je nach Lage des verjüngten Bereiches der Hülse, in vorbestimmter Weise über den ersten Teil hinausragt.

In diesem Zusammenhang ist zweckmäßigerweise vorgesehen, dass der Übergang in den verjüngten Bereich durch einen als Anschlag dienenden Vorsprung einer Innenseite der Hülse ausgebildet ist, der senkrecht zu einer Hülsenachse verläuft. Durch diese Ausbildung wird dem eingeführten rohrförmigen Teil eine satte Auflagefläche geboten, auf welcher dieser Teil zur Anlage kommen kann und während des Schweißprozesses, insbesondere während des Niederdrückens seines vorstehenden Bereiches, gehalten wird.

Der Stempel ist mit Vorteil im Querschnitt etwa T-förmig ausgebildet und achsparallel in der Hülse geführt, sodass die gesamte Konstruktion lediglich einen geringen Platzbedarf erfordert. Selbstverständlich ist es auch möglich, anstelle des durch die Hülse geführten Stempels andere Mittel zum Niederdrücken des vorstehenden Bereiches nach dessen Erwärmen vorzusehen. Beispielsweise kann das Niederdrücken und damit das Verschweißen auch erfolgen, wenn ein am rohrförmigen Teil angreifendes Mittel vorgesehen ist, welches nicht durch die Hülse geführt wird.

Um eine gleichmäßige Erwärmung der auf Temperatur zu bringenden Bereiche zu gewährleisten, kann erfindungsgemäß vorgesehen sein, dass die Heizeinrichtung in einem Kreis angeordnete Düsen zum Zuführen von Heißluft aufweist. Dabei liegen Auslässe der Düsen der Heizeinrichtung etwa in einer Ebene, d. h., dass die Auslässe, aus welchen Heißluft ausströmt, in einer parallelen Ebene zur Stützplatte bzw. dem insbesondere flach ausgebildeten Teil liegen.

Damit bei ringförmiger Anordnung der Düsen, wie im vorstehenden Absatz beschrieben, eine noch gleichmäßigere Erwärmung des vorstehenden Bereiches des rohrförmigen Teils und des anliegenden Bereiches des ersten Teils erreicht werden kann, ist die Heizeinrichtung mit Vorzug länglich ausgebildet und um ihre Längsachse schwenkbar oder rotierbar. Dies ermöglicht es, im Betrieb die Heizeinrichtung zu schwenken bzw. zu rotieren und damit die genannten Bereiche besonders gleichmäßig zu erwärmen.

Weitere Merkmale, Vorteile und Wirkungen der Erfindung ergeben sich aus den nachfolgend dargestellten Ausführungsbeispielen sowie den Zeichnungen, auf welche Bezug genommen wird. Dabei zeigen:
Fig. 1 eine schematische Darstellung einer erfindungsgemäßen Vorrichtung;
Fig. 2 eine schematische Darstellung einer weiteren erfindungsgemäßen Vorrichtung.

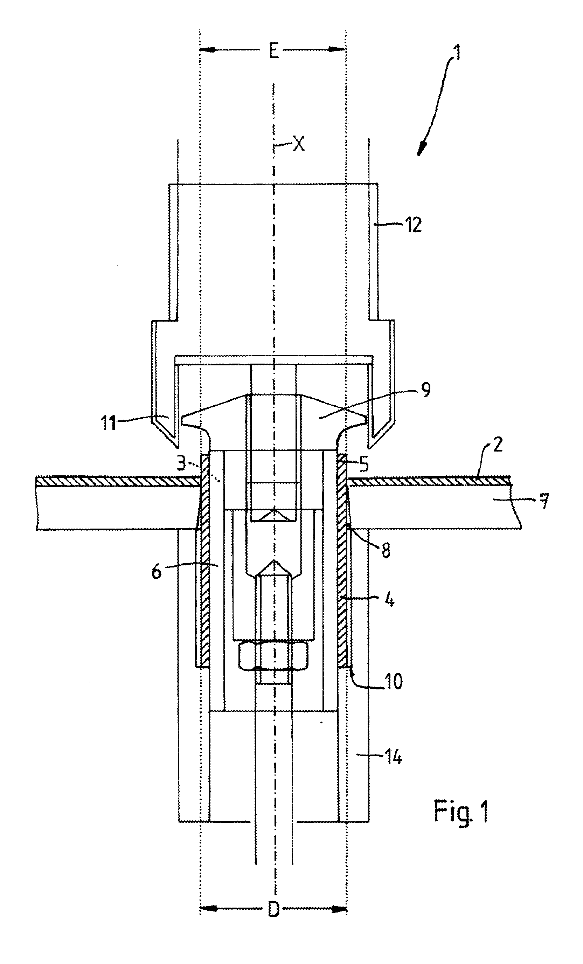

In Fig. 1 ist eine Variante einer erfindungsgemäßen Vorrichtung 1 in einem schematischen, teilweisen Querschnitt näher dargestellt, wobei lediglich zu verbindende Teile 2, 4 schraffiert sind. Die Vorrichtung 1 umfasst eine Stützplatte 7 mit zumindest einer Durchbrechung 8, vorzugsweise einer Vielzahl von kreisförmigen Durchbrechungen 8, welche voneinander beabstandet angeordnet sind. In einem unteren Bereich der Stützplatte 7 ist eine Hülse 14 angebracht oder integral angeformt, und zwar im Bereich der Durchbrechung 8. Die Hülse 14 weist im Anschlussbereich an die Stützplatte 7 einen inneren freien Durchmesser auf, der zumindest so groß ist wie ein Durchmesser der Durchbrechung 8 und vorzugsweise entsprechend dem Durchmesser der Durchbrechung 8 ausgebildet ist. Des Weiteren umfasst die Vorrichtung 1 einen im Querschnitt etwa T-förmigen Stempel 9, der von der der Hülse 14 gegenüberliegenden Seite der Stützplatte 7 durch die Hülse 14 hindurchgeführt ist. Des Weiteren umfasst die Vorrichtung 1 eine Heizeinrichtung 12 mit mehreren Düsen 11, die um eine Kopfseite des Stempels 9 herum angeordnet sind und über welche Heißluft zuführbar ist.

Ist ein erster Teil 2, beispielsweise eine Lochplatte oder eine Lochfolie aus einem thermoplastischen Material, mit einem rohrförmigen Teil 4 im Bereich einer Öffnung 3 des ersten Teils 2 zu verschweißen, so wird in den anzuschweißenden rohrförmigen Teil 4 zuerst eine Stützhülse 6, beispielsweise aus einem metallischen Material wie Stahl, eingepresst, sodass die Stützhülse 6 den rohrförmigen Teil 4 nach außen bzw. in radialer Richtung unterstützt bzw. vorspannt. Damit diese Unterstützung auch beim Verschweißen über eine gesamte Länge des rohrförmigen Teils 4 erhalten bleibt, ist die Stützhülse 6 vorzugsweise mit einer größeren Länge als der rohrförmige Teil 4 ausgebildet. Nach Einpressen der Stützhülse 6 in den rohrförmigen Teil 4 oder parallel dazu wird der erste Teil 2 auf der Stützplatte 7 abgelegt und auf dieser ausgerichtet, und zwar so, dass eine Öffnung 3 des ersten Teils 2 exakt über einer etwa gleich dimensionierten Durchbrechung 8 der Stützplatte 7 liegt. Danach werden der rohrförmige Teil 4, dessen äußerer Durchmesser D etwa einem Durchmesser E der Öffnung 3 entspricht, und die Stützhülse 6 gemeinsam von oben durch den ersten Teil 2 und die Stützplatte 7 eingeführt. Anschließend wird der beispielsweise hydraulisch betätigte Stempel 9 durch die Hülse 14 hindurch nach unten gezogen, sodass der rohrförmige Teil 4 zusammen mit der Stützhülse 6 nach unten geführt wird, bis schließlich der rohrförmige Teil 4 an einem Vorsprung bzw. einem Anschlag 10 der Hülse 14 anstößt und daher nicht weiterbewegt werden kann. Die Stützhülse 6 kann in der Folge durch die Presskraft des Stempels 9 je nach Bedarf weiter in die Hülse 14 eingezogen werden. Ist schließlich eine für ein Verschweißen optimale Position auch der Stützhülse 6 erreicht, so werden der vorstehende Bereich 5, also jener Bereich des rohrförmigen Teils 4, der auf einer Seite des ersten Teils 2 liegt, und der am vorstehenden Bereich 5 angrenzende bzw. benachbarte Bereich des ersten Teils 2 mit einer Heizeinrichtung 12, die mehrere in einer Ebene angeordnete Düsen 11 umfasst, mit Heißluft beaufschlagt. Dabei wird die Heizeinrichtung 12 um eine gemeinsame Achse X der Hülse 14, der Stützhülse 6, des Stempels 9, der Heizeinrichtung 12 und schließlich des rohrförmigen Teils 4 geschwenkt bzw. rotiert. Damit ist sichergestellt, dass das Erwärmen der genannten Bereiche möglichst gleichmäßig erfolgt. Wenn der Bereich 5 und der angrenzende Bereich des ersten Teils 2 auf einer Temperatur sind, die ein Verbinden bzw. Verschweißen der Teile 2, 4 miteinander erlaubt, wird der Stempel 9 weiter nach unten bewegt bzw. eingezogen, sodass der nun plastische Bereich 5 des rohrförmigen Teils 4 zuerst umgeknickt und dann auf den ersten Teil 2 angedrückt und damit mit diesem verschweißt wird. Je nach Verfahrensart kann noch für eine gewisse Zeitspanne ein Nachdrücken mittels des Stempels 9 erfolgen. Anschließend wird der Stempel 9 ebenso wie die Heizeinrichtung 12, sofern diese nicht schon früher abgenommen worden ist, nach oben bewegt und aus der Hülse 14 geführt. Die Teile 2, 4 sind nun miteinander verschweißt. Eine so erstellte Schweißverbindung zeichnet sich im Vergleich mit Schweißverbindungen gemäß dem Stand der Technik durch bessere Dichtheit, größere Homogenität und eine verbesserte Belastbarkeit im Einsatz aus. Daneben ist bisher eingesetzter Schweißdraht entbehrlich, was zu einer Kostenreduktion führt.

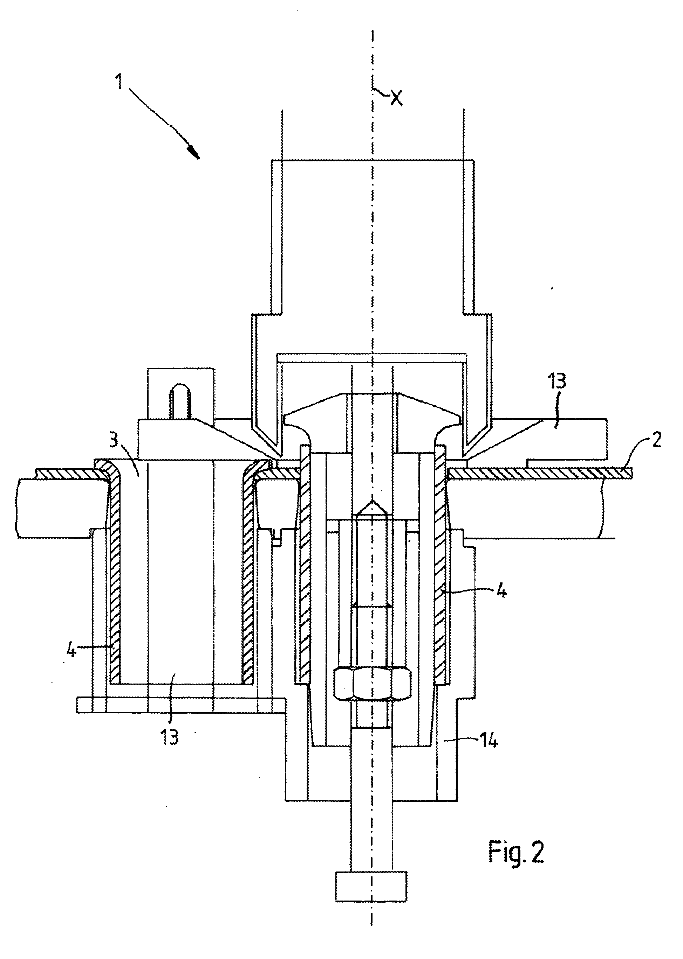

In Fig. 2 ist eine Weiterbildung der Vorrichtung gemäß Fig. 1 dargestellt. In dieser Variante sind zusätzlich Niederhalter 13 vorgesehen, durch welche der Teil 2 während eines Verschweißens relativ zum Teil 4 zusätzlich in Position gehalten wird. Die Niederhalter 13 sind dabei in ihrer Dimensionierung so ausgelegt, dass sie einerseits an die Hülse 14 angekoppelt sind und andererseits durch einen bereits angeschweißten rohrförmigen Teil 4 bzw. eine Öffnung 3 geführt werden können, sodass diese zusätzliche Fixierung auf besonders einfache Weise nahe an der Schweißstelle erfolgen kann.

Es versteht sich für den Fachmann, dass die vorstehend erläuterten Ausführungsbeispiele lediglich mögliche Wege zur Ausführung der Erfindung darstellen und die Erfindung keineswegs auf die dargestellten Ausführungsbeispiele beschränkt ist. Beispielsweise kann das Erwärmen einzelner Bereiche auch mit alternativen Mitteln, z. B. mittels eines Heizdrahtes oder eines Gasbrenners erfolgen, ohne das erfindungsgemäße Konzept zu verlassen.

## Patentansprüche

1. Verfahren zum Schweißen von Teilen (2, 4) aus thermoplastischen Materialien, wobei ein erster, insbesondere flach ausgebildeter Teil (2), der zumindest eine Öffnung (3) aufweist, im Bereich der Öffnung (3) mit einem weiteren, rohrförmigen Teil (4) verschweißt wird, dessen äußerer Durchmesser (D) etwa einem Durchmesser (E) der Öffnung (3) entspricht, wobei der rohrförmige Teil (4) von einer Seite zusammen mit einer innenseitig anliegenden Stützhülse (6) in die Öffnung (3) des ersten Teils (2) eingeführt wird, sodass der rohrförmige Teil (4) auf der anderen Seite des ersten Teils (2) vorsteht, wonach ein vorstehender Bereich (5) des rohrförmigen Teils (4) und ein dazu benachbarter Bereich des ersten Teils (2) auf eine Temperatur gebracht werden, bei welcher der vorstehende Bereich (5) mit dem ersten Teil (2) verschweißt werden kann, worauf bei Halten der Teile (2, 4) auf den vorstehenden Bereich (5) des rohrförmigen Teils (4) eine Kraft aufgebracht wird, um den vorstehenden Bereich (5) auf den ersten Teil (2) zu drücken und somit die Teile (2, 4) zu verschweißen.

2. Verfahren nach Anspruch 1, **dadurch gekennzeichnet, dass** eine Stützhülse (6) eingesetzt wird, die länger als der rohrförmige Teil (4) ist.

3. Verfahren nach Anspruch 2, **dadurch gekennzeichnet, dass** der erste Teil (2) auf einer Stützplatte (7) mit zumindest einer zur Öffnung (3) korrespondierenden Durchbrechung (8) aufgelegt wird, wobei die Öffnung (3) und die Durchbrechung (8) übereinander ausgerichtet werden.

4. Verfahren nach Anspruch 3, **dadurch gekennzeichnet, dass** die Stützhülse (6) in den rohrförmigen Teil (4) eingepresst und dabei in axialer Richtung an einem ihrer Enden mit einem Ende des rohrförmigen Teils (4) bündig ausgerichtet wird, wonach die bündig ausgerichteten Enden des rohrförmigen Teils (4) und der Stützhülse (6) von oben in die Öffnung (3) und Durchbrechung (8) eingeführt werden.

5. Verfahren nach Anspruch 4, **dadurch gekennzeichnet, dass** der rohrförmige Teil (4) mit der Stützhülse (6) mit einem im Querschnitt etwa T-förmigen Stempel (9), der innerhalb der Stützhülse (6) achsparallel zu dieser positioniert wird, durch die Öffnung (3) und die Durchbrechung (8) eingezogen wird, bis der rohrförmige Teil (4) an einem Anschlag (10) zu liegen kommt, wonach die Stützhülse (6) optional alleine weiter eingezogen wird, bis der Stempel (9) gegebenenfalls am rohrförmigen Teil (4) zum Anliegen kommt.

6. Verfahren nach einem der Ansprüche 1 bis 5, **dadurch gekennzeichnet, dass** der erste Teil (2) und der rohrförmige Teil (4) während des Verschweißens relativ zueinander fixiert gehalten werden.

7. Verfahren nach einem der Ansprüche 1 bis 6, **dadurch gekennzeichnet, dass** das Erwärmen mit Heißluft durchgeführt wird.

8. Verfahren nach Anspruch 7, **dadurch gekennzeichnet, dass** die Heißluft über mehrere Düsen (11) gerichtet zugeführt wird.

9. Verfahren nach Anspruch 8, **dadurch gekennzeichnet, dass** Auslässe der Düsen (11) in einer Ebene und mit etwa gleichmäßigem Abstand zueinander sowie konstantem Abstand zur Umfangsfläche des rohrförmigen Teils (4) angeordnet werden.

10. Verfahren nach Anspruch 8 oder 9, **dadurch gekennzeichnet, dass** die Düsen (11) während des Erwärmens um eine Längsachse (X) des rohrförmigen Teils (4) geschwenkt oder gedreht werden.

11. Verfahren nach einem der Ansprüche 1 bis 10, **dadurch gekennzeichnet, dass** der erste Teil (2) in Form einer Lochplatte mit kreisrunden Öffnungen (3) vorliegt und mehrere rohrförmige Teile (4) mit einer passenden Zylinderform eingesetzt werden.

12. Gegenstand, hergestellt gemäß dem Verfahren nach einem der Ansprüche 1 bis 11.

13. Vorrichtung (1) zum Verschweißen eines ersten, insbesondere flach ausgebildeten Teils (2), der zumindest eine Öffnung (3) aufweist, mit einem weiteren, rohrförmigen Teil (4) im Bereich der Öffnung (3) des ersten Teils (2), wobei ein äußerer Durchmesser (D) des rohrförmigen Teils (4) etwa einem Durchmesser (E) der Öffnung (3) entspricht und wobei beide Teile (2, 4) aus thermoplastischen Materialien gebildet sind, wobei Halteelemente, mit welchen der erste Teil (2) und der durch die Öffnung (3) des ersten Teils (2) mit einem vorstehenden Bereich (5) eingeführte rohrförmige Teil (4) relativ zueinander fixierbar sind, sowie eine Heizeinrichtung (12) zum Erwärmen des vorstehenden Bereiches (5) und eines dazu benachbarten Bereiches des ersten Teils (2) und ein Stempel (9) zum Andrücken des erwärmten vorstehenden Bereiches (5) an den ersten Teil (2) vorgesehen sind, **dadurch gekennzeichnet, dass** eine Stützhülse (6) für den rohrförmigen Teil (4) vorgesehen ist.

14. Vorrichtung (1) nach Anspruch 13, **dadurch gekennzeichnet, dass** die Halteelemente eine Stützplatte (7) mit zumindest einer Durchbrechung (8) als Unterlage für den ersten Teil (2) und zumindest eine im Bereich der Durchbrechung (8) senkrecht zur Stützplatte (7) angeordnete Hülse (14) zum Halten des rohrförmigen Teils (4) umfassen.

15. Vorrichtung (1) nach Anspruch 14, **dadurch gekennzeichnet, dass** die Hülse (14) an einer Unterseite der Stützplatte (7) angeordnet ist.

16. Vorrichtung (1) nach Anspruch 15, **dadurch gekennzeichnet, dass** die Hülse (14) im an die Stützplatte (7) anschließenden Bereich mit einem Durchmesser entsprechend dem Durchmesser der Durchbrechung (8) ausgebildet ist und anschließend einen verjüngten Bereich aufweist.

17. Vorrichtung (1) nach Anspruch 16, **dadurch gekennzeichnet, dass** der Übergang in den verjüngten Bereich durch einen als Anschlag (10) dienenden Vorsprung einer Innenseite der Hülse (14) ausgebildet ist, der senkrecht zu einer Hülsenachse verläuft.

18. Vorrichtung (1) nach einem der Ansprüche 14 bis 17, **dadurch gekennzeichnet, dass** der Stempel (9) im Querschnitt etwa T-förmig ausgebildet und achsparallel in der Hülse (14) geführt ist.

19. Vorrichtung (1) nach einem der Ansprüche 14 bis 18, **dadurch gekennzeichnet, dass** die Heizeinrichtung (12) in einem Kreis angeordnete Düsen (11) zum Zuführen von Heißluft aufweist.

20. Vorrichtung (1) nach Anspruch 19, **dadurch gekennzeichnet, dass** Auslässe der Düsen (11) der Heizeinrichtung (12) etwa in einer Ebene liegen.

21. Vorrichtung (1) nach Anspruch 19 oder 20, **dadurch gekennzeichnet, dass** die Heizeinrichtung (12) länglich ausgebildet und um ihre Längsachse schwenkbar oder rotierbar ist.

## Claims

1. Method for welding of parts (2, 4) made of thermoplastic materials, wherein a first, in particular flat configured part (2), with at least one opening (3), in the section of the opening (3) are welded together with an additional tubular part (4), whose outer diameter (D) corresponds approximately to another diameter (E) of the opening (3), whereby the tubular part (4) is introduced from one side along with the inner side adjacent the support sleeve (6) into the opening (3) of the first part (2), so that the tubular part (4) projects to the other side of the first part (2), after which a projecting section (5) of the tubular part (4), and a thereto adjoining area of the first part (2) is brought to a temperature , at which the projecting section (5) can be welded to the first part (2), whereon by keeping the parts (2, 4) at the projecting section (5) of the tubular part (4) force is applied pressing the projecting section (5) with the first part (2), and thus welding the parts together(2, 4).

2. A method according to claim 1, **characterized in that** a supporting sleeve (6) is used, which is longer than the tubular part (4).

3. A method according to claim 2, **characterized in that** the first part (2) is placed on a support plate (7) with at least one opening (3), corresponding to the breach (8), whereby the aperture (3) and the opening (8) are aligned with each other.

4. A method according to claim 3, **characterized in that** the support sleeve (6) is pressed into the tubular part (4) and is then aligned flush in the axial direction at one of its ends with one end of the tubular part (4), whereupon the flush aligned ends of the tubular part (4) and the support sleeve (6) are introduced from above into the opening (3) and breach (8).

5. A method according to claim 4, **characterized in that** the tubular part (4) with the supporting sleeve (6) with a cross-sectional approximately T-shaped plunger (9) is positioned within the support sleeve (6) paraxial to the latter, is fed through the opening (3) and the breach (8) until the tubular part (4) comes to rest against a stop (10), after which the support sleeve (6) is optionally further drawn alone to the plunger (9) is potentially brought up against the tubular part (4).

6. A method according to one of claims 1 to 5, **characterized in that** the first part (2) and the tubular part (4) during the welding are kept fixed relative to each other.

7. A method according to one of claims 1 to 6, **characterized in that** the heating is carried out with hot air.

8. A method according to claim7, **characterized in that** the hot air is supplied by multiple directed nozzles (11).

9. A method according to claim 8, **characterized in that** the outlets of the nozzles (11) are arranged in a plane and spaced at approximately evenly distances from one another and at a constant distance to the circumferential surface of the tubular part (4).

10. A method according to claim 8 or 9, **characterized in that** the nozzles (11) are pivoted or rotated during the heating to a longitudinal axis (X) of the tubular member (4).

11. A method according to any one of claims 1 to 10, **characterized in that** the first part (2) is in the form of a perforated plate with circular openings (3) and several tubular parts (4) are used with a suitable cylindrical shape.

12. Object manufactured according to the method of any one of claims 1 to 11.

13. Apparatus (1) for welding a first, in particular flat-shaped part (2) having at least one opening (3), with a further tubular part (4), in the region of the opening (3) of the first part (2) wherein an outer diameter (D) of the tubular part (4) is approximately equal to a diameter (E) of the opening (3) and wherein both parts (2, 4) are formed of thermoplastic materials, wherein the holding elements, with which the first part (2) and the opening (3) of the first part (2) with a projecting area (5) inserted tubular part (4) can be fixed relative to each other, and a heater(12) is provided for heating the projecting area (5) and an adjacent area of the first part (2) and a punch (9) for pressing the heated projecting area (5) at the first part (2) characterized that a support sleeve (6) is provided for the tubular part (4).

14. Apparatus (1) according to claim 13, **characterized in that** the holding elements have a support plate (7) with at least one breach (8) as a support for the first part (2) and at least one sleeve arranged (14) in the area of the opening (8) perpendicular to the support plate (7) for supporting the tubular part (4).

15. Apparatus (1) according to claim 14, **characterized in that** the sleeve (14) is arranged on an underside of the support plate (7).

16. Apparatus (1) according to claim 15, **characterized in that** the sleeve (14) in the area adjacent to the support plate (7) is formed with a diameter corresponding to the diameter of the breach (8) and then has a tapered region.

17. Apparatus (1) according to claim 16, **characterized in that** the transition to the tapered area is formed by a projection inside of the sleeve (14) serving as a stopper (10), which is perpendicular to a tube axis.

18. Apparatus (1) according to any one of claims 14 to 17, **characterized in that** the punch (9) is guided in cross-section approximately T-shaped and parallel to the axis in the sleeve (14).

19. Apparatus (1) according to any one of claims 14 to 18, **characterized in that** the heating device (12) has a circular nozzle arrangement (11) for supplying hot air

20. Apparatus (1) according to claim 19, **characterized in that** the nozzle outlets (11) of the heater (12) are located approximately in one plane.

21. Apparatus (1) according to claim 19 or 20, **characterized in that** the heating device (12) is elongated and is pivotable or rotatable about its longitudinal axis.

## Revendications

1. Procédure de soudage de pièces (2, 4) en matière thermoplastique, par laquelle une première pièce de forme plate (2) comportant au moins un orifice (3), est soudée à une autre pièce (4) de forme tubulaire au niveau de l'orifice (3) dont le diamètre extérieur (D) correspond à peu près au diamètre (E) de l'orifice (3), la pièce tubulaire (4) étant introduite d'un côté conjointement avec le manchon intérieur (6) dans l'orifice (3) de la première pièce (2), de sorte que la pièce tubulaire (4) dépasse de l'autre côté la première pièce (2), après quoi la partie en saillie (5) de la pièce tubulaire (4) et une partie voisine de la première pièce (2) sont portées à une température à laquelle la partie en saillie (5) peut être soudée à la première pièce (2); ensuite, en tenant les pièces (2, 4), une force est appliquée sur la partie en saillie (5) de la pièce tubulaire (4), afin d'appuyer la partie en saillie (5) sur la première pièce (2), afin de souder les pièces (2, 4).

2. Procédure selon la revendication 1, **caractérisée par le fait qu'**un manchon (6) est mis en place, lequel est plus long que la pièce tubulaire (4).

3. Procédé selon la revendication 2 **caractérisé par le fait que** la première pièce (2) est posée sur une plaque de support (7) présentant un orifice (3) est alignée selon un trou (8), la perforation (3) et le trou (8) se superposant.

4. Procédure selon la revendication 3, **caractérisée par le fait que** le manchon (6) est enfoncé dans la pièce tubulaire (4) en l'alignant dans le sens de l'axe pour que l'une de ses extrémités affleure l'extrémité de la pièce tubulaire (4), après quoi les extrémités affleurantes de la pièce tubulaire (4) et le manchon (6) sont introduits par le haut dans l'orifice (3) et dans le trou (8).

5. Procédure selon la revendication 4, **caractérisée par le fait que** la pièce tubulaire (4) munie du manchon (6) est positionnée avec un tampon de section en forme de « T » (9) à l'intérieur du manchon (6) parallèlement à l'axe de ce dernier, la pièce tubulaire (4) étant alors introduite par l'orifice (3) et par le trou (8) jusqu'à ce que la pièce tubulaire (4) cogne sur la butée (10), après quoi le manchon (6) est tiré jusqu'à ce que le tampon (9) touche la pièce tubulaire (4).

6. Procédure selon l'une des revendications 1 à 5, **caractérisée par le fait que** la première pièce (2) et la pièce tubulaire (4) doivent être fixées l'une par rapport à l'autre pendant le soudage.

7. Procédure selon l'une des revendications 1 à 6, **caractérisée par le fait que** la chauffe est réalisée par air chaud.

8. Procédure selon la revendication 7, **caractérisée par le fait que** l'air chaud est fourni en utilisant plusieurs tuyères (11).

9. Procédure selon la revendication 8, **caractérisée par le fait que** les sorties des tuyères (11) sont arrangées sur un seul niveau et à équidistance par rapport à la surface périphérique de la pièce tubulaire (4).

10. Procédure selon l'une des revendications 8 ou 9, **caractérisée par le fait que** pendant la chauffe, les tuyères (11) sont pivotées ou tournées autour de l'axe longitudinal (X) de la pièce tubulaire (4).

11. Procédure selon l'une des revendications 1 à 10, **caractérisée par le fait que** la première pièce (2) est une plaque perforée par des orifices circulaires (3), dans lesquels plusieurs pièces tubulaires (4) de forme cylindrique adéquate sont enfoncées.

12. Objet fabriqué selon la procédure selon l'une des revendications 1 à 11.

13. Dispositif (1) de soudage d'une première pièce de forme plate (2), comportant au moins un orifice (3), dotée d'une autre pièce de forme tubulaire (4) au niveau de l'orifice (3) de ladite première pièce (2), le diamètre extérieur (D) de la pièce tubulaire (4) correspondant à peu près au diamètre (E) de l'orifice (3), les deux pièces (2, 4) étant en matière thermoplastique, des éléments de fixation de la première pièce (2) et de la pièce tubulaire introduite par l'orifice (3) avec sa partie en saillie (5) étant fixés l'un par rapport à l'autre ; et un dispositif de chauffage (12) destiné à chauffer la partie en saillie (5) et une partie avoisinante de la première pièce (2), ainsi qu'un tampon (9) destiné à presser la partie en saillie chauffée (5) contre la première pièce (2), **caractérisée par le fait qu'**un manchon intérieur (6) est prévu pour la pièce tubulaire (4).

14. Dispositif (1) selon la revendication 13, **caractérisé par le fait que** les éléments de fixation embrassent une plaque de support (7) comportant au moins un trou (8) et servant de support à la première pièce (2), ainsi qu'au moins un manchon (14), placé perpendiculairement à la plaque de support (7) dans la zone du trou (8) et permettant le maintien en place de la pièce tubulaire (4).

15. Dispositif selon la revendication 14, **caractérisé par le fait que** le manchon (14) est arrangé sur la face inférieure de la plaque de support (7).

16. Dispositif selon la revendication 15, **caractérisé par le fait que** dans la zone adjacente à la plaque de support (7), le manchon (14) présente un diamètre correspondant à celui du trou (8) et qu'il continue en s'amincissant.

17. Dispositif (1) selon la revendication 16, **caractérisé par le fait que** la transition vers la partie amincie présente une saillie sur la face intérieure du manchon (14) servant de butée (10) perpendiculaire à l'axe du manchon.

18. Dispositif (1) selon l'une des revendications 14 à 17, **caractérisé par le fait que** le tampon (9) présente une section en forme de « T » et qu'il est introduit dans le manchon (14) parallèlement à l'axe.

19. Dispositif (1) selon l'une des revendications 14 à 18, **caractérisé par le fait que** le dispositif de chauffage (12) est composé de tuyères (11), arrangées en cercle, permettant l'alimentation en air chaud.

20. Dispositif (1) selon la revendication 19, **caractérisé par le fait que** les sorties des tuyères (11) du dispositif de chauffage (12) sont alignées à peu près sur un même niveau.

21. Dispositif (1) selon les revendications 19 ou 20, **caractérisé par le fait que** le dispositif de chauffage (12) est de forme allongée et qu'il peut être mis en rotation ou pivoté sur son axe longitudinal.
